Europäisches Patentamt

(19) European Patent Office

Office européen des brevets

(11) Publication number: **0 028 879**
**B1**

(12) **EUROPEAN PATENT SPECIFICATION**

(45) Date of publication of patent specification: **28.03.90**

(21) Application number: **80303285.3**

(22) Date of filing: **18.09.80**

(51) Int. Cl.⁵: **H 01 M 4/24, H 01 M 4/62**

(54) **Zinc electrodes for nickel-zinc accumulators.**

(30) Priority: **30.10.79 US 89378**

(43) Date of publication of application:
**20.05.81 Bulletin 81/20**

(45) Publication of the grant of the patent:
**28.03.90 Bulletin 90/13**

(84) Designated Contracting States:
**DE FR GB IT**

(56) References cited:
**DE-C- 818 519**
**FR-A-2 239 770**
**FR-A-2 251 922**
**FR-A-2 264 401**
**FR-E- 61 396**
**GB-A-1 237 117**
**US-A-3 046 326**
**US-A-3 132 053**
**US-A-3 271 195**

The file contains technical information
submitted after the application was filed and
not included in this specification

(73) Proprietor: **GENERAL MOTORS CORPORATION**
**General Motors Building 3044 West Grand**
**Boulevard**
**Detroit Michigan 48202 (US)**

(72) Inventor: **Jones, Richard Alan**
**1622 Corlett Way**
**Anderson Indiana 46011 (US)**

(74) Representative: **Haines, Arthur Donald et al**
**GM Patent Section Luton Office (F6) P.O. Box**
**No. 3 Kimpton Road**
**Luton, Beds. LU2 OSY (GB)**

(56) References cited:
**CHEMICAL ABSTRACTS, vol. 79, no. 22, 3rd**
**December 1973, page 409, no. 132314w,**
**Columbus, Ohio, U.S.A. & JP-A-73 54444**
**PATENT ABSTRACTS OF JAPAN; vol. 4, no. 97**
**(E-18)(579), 12th July 1980, page 29E18 &**
**JP-A-55 59665**

Courier Press, Leamington Spa, England.

## Description

This invention relates to Ni-Zn electric storage batteries and more particularly to zinc electrodes for such batteries.

Zinc electrodes have heretofore customarily been made by homogeneously mixing zinc oxide powder with binder materials such as polystyrene, polytetrafluoroethylene, polyvinylidene fluoride, methylcellulose, carboxymethylcellulose, polyvinylalcohol or polyethylene oxide and applying the mix to a conducting/supporting gridwork. Some other electrodes (including zinc) have been proposed wherein the active material particles are mixed with any of a variety of fibres to strengthen the finished electrode. In this regard, US—A—3,271,195 (Berchielli) discloses such electrodes containing strengthening fibres such as: natural, modified natural, and synthetic organic fibres; natural and manufactured mineral fibres; metallic fibres; and fibre glass.

Small quantities of lead (i.e., as Pb, Pb0 or $Pb_3O_4$) or copper powder have been added to the zinc oxide mix to promote better utilization of the zinc, and hence, improve the capacity of the electrode. Likewise, HgO has been added to raise the hydrogen overvoltage and reduce $H_2$ gassing.

In addition to the foregoing, calcium hydroxide or calcium oxide has been added to the zinc electrode to promote the formation of insoluble calcium zincate rather than soluble potassium zincate. Formation of calcium zincate increase battery cycle life by reducing the formation of zinc dendrites which can bridge the interelectrode gap and short out the cell. Moreover, US—A—3,816,178 disclosed that ternary electrode compositions (i.e., $ZnO/Ca(OH)_2/Pb_3O_4$) were superior to binary electrode compositions (i.e., $ZnO/Ca(OH)_2$). Though the calcium zincate reduces dendrite formation, at least one observer has reported its tendency toward cementation, and hence, reduced effectiveness, on cycling.

The zinc electrodes are separated from the nickel (i.e, NiOOH) electrodes by microporous membranes or separators as a final protection against interplate dendrite growth and internal cell shorting. These separators (typically sausage casing and the like) resist current flow within the cell. The higher the resistance of the separators, the lower the power and the greater the internal heating. Excessive internal heating of the battery shortens the live thereof.

Zinc electrodes have traditionally suffered from a problem known as "shape change" which results from an uneven deposition of the zinc on the electrode on succeeding charge and discharge cycles. As a result, more zinc tends to accumulate in the centre of the electrode where it becomes dense and nonreactive. The edges of the electrode, on the other hand, become depleted of zinc. The net result is a deformed electrode having a very small effective surface area available for reaction. Shape change commonly occurs in plates having uneven current distribution therethrough, and the condition is amplified as the surface area of the electrode increases. Practical batteries having both energy and power capabilities (e.g., for electric vehicle applications) require relatively large area electrodes generally greater than 161.29 cm².

Zinc electrodes made from customary binder materials have demonstrated relatively poor capacity and power retention upon cycling (i.e, charging and discharging), and often fall below a useful level, for many applications, after too few cycles. It has been observed that electrodes so made often show signs of segregation of the zinc, zinc oxide and binder especially toward the end of their useful life. For example, visual inspection of zinc electrodes made from resin-type binders (eg, polystyrene) has shown that the initial homogeneous distribution of zinc oxide and binder is lost as cycling proceeds and small islands of zinc, zinc oxide and binder begin to appear across the face of the electrode. Moreover, microscopic examination of the cycled electrodes reveals that the resin-type binders tend to concentrate nearer the grid and the zinc nearer the surface of the electrode. This segragation of binder and active material tends to progressively passivate the electrode as cycling progresses. The water-soluble/KOH-insoluble type binders (eg, cellulosic-type), on the other hand, tend to migrate due to electrolyte concentration and temperature variations. Such variations affect the solubility of these water-soluble binders in a cycling environment and appear to cause local dissolution and precipitation as the concentration of the electrolyte changes. Studies of these electrodes show the formation of thin films of the binder on the surface of the electrodes. Instability of such binders coupled with the aforesaid film formation tends to shorten the lives of zinc electrodes made therefrom. Because of the reduced effectiveness of the zinc electrode to efficiently utilize its zinc content, workers in the field have traditionally provided approximately three times more zinc electrode capacity than nickel electrode capacity (eg, 300 AH of zinc oxide per 100 AH $Ni(OH)_2$).

An alkaline nickel-zinc electric storage battery cell in accordance with the present invention is characterised by the features specified in the characterising portion of claim 1.

According to the present invention, a Ni-Zn battery has a zinc electrode whose active material includes insoluble zincate-forming additives; is pervaded with an entanglement of stable, reinforcing, and hydrophilic fibres to irrigate the active material for maintaining the effectiveness of the insoluble zincate-forming additives; and contains substantially no other binders which would significantly interfere with the ability of the fibres to so irrigate the active material.

The invention is hereinafter particularly described with reference to the accompanying drawings in which:-

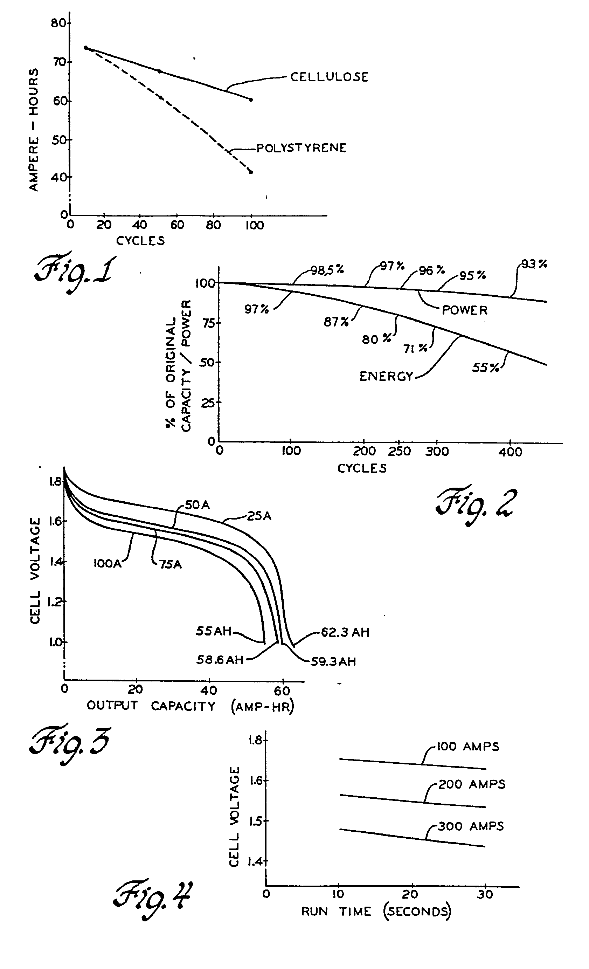

Figures 1—4 are curves showing the performance of Ni-Zn cells made in accordance with the present invention.

The invention comprehends a zinc electrode for an alkaline, Ni-Zn battery comprising a substantially homogeneous mixture of: zinc-rich particles (i.e., zinc, zinc hydroxide, and/or zinc oxide); calcium oxide or hydroxide particles for forming Ca-zincate during cell discharge; and an entanglement of natural cellulose fibres. Zinc electrodes containing natural cellulose fibres and Ca-zincate forming particles have demonstrated superior capacity and power retention after prolonged cycling. The precise mechanism by which the natural cellulose fibre holds the zinc-rich and calcium oxide or hydroxide particles together and maintains capacity and power levels for prolonged periods is not completely understood. It is believed that the entangling of the fibres, in the paper fashion, mechanically retains and strengthens the active material while the fibres' inherent hydrophilicity and absorbancy serve to irrigate the active material with electrolyte. Scanning electron microscope studies of cycled zinc electrodes show zinc-rich crystals adhering to the fibres. Whatever the mechanisms, prolonged life at high capacity and power levels has been observed.

In a preferred embodiment of the invention, the zinc electrode includes calcium oxide or hydroxide particles, natural cellulose fibres and is substantially free of other customary binder materials. By "natural cellulose fibres" is meant cellulose fibres substantially as they occur in nature's plant life without dissolution and regeneration from solution. The calcium oxide/hydroxide particles are substituted for some of the excess zinc otherwise normally provided to ensure capacity, and serve to trap the reacted zinc *in situ* in the form of insoluble calcium zincate. No more calcium hydroxide need be added than will react with the zinc in the cell environment. About 0.25—1.5 moles of the calcium compound per mole of zinc oxide has been suggested. Any amount more than that serves only to consume valuable space otherwise available for more zinc. When calcium oxide/hydroxide is coupled with the natural cellulose fibre, passivisation due to calcium zincate cementation is avoided and much lower zince oxide to $Ni(OH)_2$ ratios than are normally employed are made possible.

The preferred electrode also includes a small quantity (i.e., no more than about 4.0% by weight) of lead. The lead improves the turn around efficiency (i.e., watt-hours out/watt-hours in) primarily in the early cycles. Substantially Pb-free electrodes, on the other hand, have somewhat less turn around efficiency in their early cycles, but have demonstrated higher retained capacities in the last half of their cycle life. In one test, for example, a test cell containing only zinc oxide, $Ca(OH)_2$ and newsprint, but no lead, lost only 4% of its capacity between cycles 100 and 290 and generally showed a capacity retention curve flatter near the end of cycling than that shown in Figure 2 for Pb-containing electrodes. Still further, the preferred embodiment includes a copper grid. The copper grid provides more uniform current distribution across the face of the electrode and reduces the internal resistance of the battery, both of which seem to have an effect on reducing the rate of shape change. It is preferred to use relatively low resistance polyolefinic separators such as Celgard (R.T.M.) 2400 or 2500 with suitable wetting agents. This reduces the internal electrical resistance of the cells and permits better electrolyte circulation. In this latter regard, the zinc electrode of the present invention makes possible use of such low resistance separators whose porosity and pore size would not otherwise alone be adequate to suppress interplate dendrite growth for a prolonged period.

The copper grid provides more uniform current distribution throughout the electrode than would a higher resistance grid. Likewise, the more porous separators result in more uniform electrolyte concentration within the cells as well as lower internal resistance, and consequently, less heat development and increased power. This combination (i.e, grid and separator) coupled with trapping of the zinc as calcium zincate and irrigation thereof with the cellulose fibres is seen to work in concert to suppress the rate of life robbing dendrite growth and shape change while the low internal resistance reduces heating and improves power.

The electrolyte is aqueous KOH preferably in the 10%—28% range. As the KOH approaches 30% the zincate becomes soluble and the effect of the $Ca(OH)_2$ is lost. For long-lived, deep-cycling batteries about 20% KOH seems best, while for shallow cycling uses such as an automative cranking battery about 25% seems best for cold cranking performance.

Zinc electrodes made in accordance with the present invention may be made from zinc, zinc oxide, zinc hydroxide or calcium zincate particles. Preferably, the electrodes are made by mixing zinc oxide and calcium hydroxide with the cellulose fibres as an aqueous slurry of paste and applying the mix to the grid (e.g., expanded metal, screen, perforated sheet, etc.). Thereafter, the electrode is pressed, dried and re-pressed to a predetermined finished thickness. Plates so made with zinc oxide are said to be in the "unformed" state, and are converted to zinc in the battery during "formation" which is the initial charge given to the battery. Thereafter, the electrode cycles between zinc, in the charged state, to calcium zincate in the discharged state.

The natural cellulose fibres of the present invention are substantially free of the customary binders used heretofore, and hence, their tendency to passivate the electrode in time. This is not to say that small quantities of such binders might not be used with the cellulose, but not in such quantity as to reduce the effectiveness of the cellulose in irrigating the electrode and prolonging its useful life. Successful electrodes have been made with wood-based cellulose fibres in the form of water-digested or repulped paper. In this regard, relatively low grade papers such as newsprint containing about 5% alpha cellulose, 20% lignin and 30% hemicellulose have proven nearly as effective as high grade filter paper (i.e., Whatman (RTM) No. 42) made from cotton fibres and containing 98% alpha cellulose. Success has been achieved with fibre loadings ranging from about 0.5% to about 10% by weight of the active material mix. The lower concentrations are more than adequate, and in fact, are preferred for the making of thinner plates.

In making the zinc electrode, a swatch of paper of appropriate weight is cut from a convenient source (e.g., roll or sheet). The swatch is then preferably cut in half. One of the halves is then cut or diced into very small squares, and such that the fibres are minced to lengths less than the size of the openings in the grid. The diced half and the undiced half are then added to water in a blender and stirred until the paper is repulped and a slurry of the fibres is formed. The other ingredients (i.e., zinc oxide, $Ca(OH)_2$, $Pb_3O_4$, etc.) are then added to the blender and homogenized with the cellulose fibres. The slurry is then applied to the grid. Thick slurries may be pasted onto the grid as by a spatula or conventional grid pasting equipment (e.g. belt paster). Thin slurries are best applied to the grid using a conventional vacuum table technique. In either event, one half of the slurry is applied to one face of the grid, and the other half of the slurry applied to the other face of the grid. The smaller fibres from the dicing operation bridge the openings in the grid and become entangled with the long uncut fibres which tend to tie longer fibres together.

Specific examples and test results

A number of cells have been tested. Essentially, these cells comprised a nickel electrode, an appropriate separator system, a KOH electrolyte and the particular zinc electrode being tested. The cells had an odd number of plates (i.e., electrodes) stacked such that there was one more negative electrode than positive and such that both end electrodes were negative electrodes (i.e., zinc). The end electrodes had approximately one-half the capacity of the other negative electrodes in the centre of the cell stack. All electrodes, both positive and negative, were 18.288 cm tall by 10.0076 cm wide. The nickel electrodes were substantially the same for all tests and included a nickel plaque substrate (i.e., made by the General Electric Co. of the U.S.A.) impregnated with nickel hydroxide and cobalt hydroxide. The plaque included a perforated steel sheet (i.e., 0.1016 mm thick) nickel plated to a Ni thickness of about 0.00635 mm Ni. The perforations had a diameter of about 0.196 cm and a density of about 12 perforations per square cm of substrate. The sheet is then coated by the manufacturer with carbonyl nickel powder and sintered to form a substrate which is 0.9144 mm thick, has an overall (i.e., including steel sheet) porosity of about 73% and an average pore size of about 10 micrometers. The plaque was impregnated by immersing it in a two-molar solution of Ni nitrate including about 5% cobalt nitrate and cathodi-

cally forming $Ni(OH)_2$ in its pores. The cobalt or equivalent material, barium, it used to improve the charge efficiency of the electrodes. The completed electrodes comprised 24.7 gms of $Ni(OH)_2$ and 1.3 gms of $Co(OH)_2$ and had a theoretical capacity of about 7.52 ampere-hours (AH) each.

Test cells were assembled in an essentially noncompressed fashion such that the separator and bibulous mats (where used) were lightly held between the plates. The plates were immersed in the electrolyte and "formed" to approximately 200% of the capacity (i.e., ampere-hours) of the nickel electrode. Thereafter, they were discharged at about the 3 hour rate (i.e., about 30 amps) to about 85% of the theoretical capacity (amperehour) of the nickel plate (i.e., to a cut-off voltage of about 1.0). Thereafter, the cells were recharged at about 9—12 amperes to a cut-off voltage of 2.25 volts or about 90% of the theoretical capacity of the nickel electrode (i.e., about 5% overcharge). This cycle was repeated and data collected during cycling.

Figure 1 shows the retained capacities of substantially identical cells except for their zinc electrodes. The curve shown by the dashed line had a polystyrene binder for the zinc electrode while the cell represented by the solid contained no customary binder but rather only repulped newsprint in a mixture with the other active material ingredients. This cell had 13 positive plates and 14 negative plates arranged as described above. The negative plates had a zinc plated copper grid (i.e., expanded metal) and an active material comprising 37.2 grams of zinc oxide, 0.56 grams HgO and the binder. The cell represented by the dotted line had 2.23 grams of polystyrene as the binder for the zinc oxide while the cell represented by the solid-line had 4.3 grams of repulped newsprint mixed with the zinc oxide. The zinc electrodes were made as described above. The polystyrene bound electrode used as emulsion of polystyrene identified as Richamer (R.T.M.) HME and supplied by the Richardson Co. of the U.S.A. The several plates were assembled into a 27-plate 74 amperehour (AH) cell. The negative plates were wrapped with two layers of Fibrous sausage casing (FSC) and the positive plates wrapped with two layers of polypropylene membrane, Celgard (R.T.M.) K-513, sold by the Celanese Corporation of the U.S.A., Celgard (R.T.M.) K-513 is essentially a laminate of Celgard R.T.M.) 2400 (microporous polypropylene) and a nonwoven bibulous mat bonded to one side thereof and impregnated with appropriate wetting agents. The mat-side contacted the nickel plate. The data of Figure 1 shows that after five cycles both cells had the same capacity (i.e. about 74 ampere-hours) while at 100 cycles the cellulose zinc cell still had a capacity of 60 ampere-hours or about 81% of its original capacity, while the polystyrene zinc cell had a capacity of only 41 ampere-hours or about 55% of its original capacity. These cells had a ZnO-to-$Ni(OH)_2$ ampere-hour ratio of 3.26:1.

Figure 2 shows the retained energy and power capacity in terms of percent of original capacity of a particularly preferred embodiment of the invention. The test cells from which the Figure 2 data was derived comprised 29 plates including 14 positive and 15 negative plates and each had a theoretical nickel electrode capacity of 105 ampere-hours. The nickel plates were as described above whereas the central negative plates were as described hereafter. The end negatives had half the capacity of the central negative plates. Each central zinc electrode (in the unformed condition) comprised 20.1 gms of zinc oxide, 13.8 gms $Ca(OH)_2$, 1.35 gms $Pb_3O_4$ and 0.44 gms of newsprint. Some electrodes had a copper grid weighing about 5 gms and formed by punching a plurality of closely spaced 6.35 mm diameter holes across the face of a thin copper sheet while other electrodes had expanded copper grids also weighing 5 gms. The average particle sizes for the ZnO, $Ca(OH)_2$ and $Pb_3O_4$ were about 1.6 micrometers, 7.9 micrometers and 2.3 micrometers, respectively. About 0.22 grams of the newsprint was diced into small squares less than 6.35 mm on each side to provide about 50% short cellulose fibres. The newsprint was added to about 400 millilitres of $H_2O$ in a household blender sold by Waring Products Division of Dynamics Corporation of America, and repulped to a homogeneous slurry of cellulose fibres. Thereafter, the zince oxide, $Ca(OH)_2$ and $Pb_3O_4$ were added and blended into a homogeneous slurry and then cast onto the grid on a vacuum table as described above. The plates were then pressed, dried and repressed to a finished thickness of about 0.8522 mm. The zinc and nickel plates were then each wrapped with a bibulous mat of unwoven nylon (i.e., ca. 0.1275 cm thick) which is 50—80% porous. Such materials as Pellon (R.T.M.) 2501 sold by Pellon Corporation (U.S.A.), Cerex (R.T.M.) 3605, 3607 and 3610 have proven successful. Unwoven polypropylene mats such as Kendall (R.T.M.) 1583 or the S—95 or S—96 mats sold by the Kimberley Clark Corporation (U.S.A.) have also proved effective. The mat spaces the separator from the plate and permits better circulation of electrolyte in the plate-separator space. The mat-wrapped electrodes were then each wrapped in two layers of microporous polypropylene separator material (i.e., Celgard (R.T.M.) 2400). Celgard (R.T.M.) 2500 has also been used successfully. The lower resistance 2500 separators are preferred for their higher porosity (i.e., 45%) and larger pore size (i.e., 0.4 micrometers), and hence, lower internal resistance. The separators are folded over the bottom of the plates and heat sealed together along the sides thereof. These tsst cells had a theoretical capacity of about 105 ampere-hours, an actual working capacity (i.e., @ 85% depth of discharge) of about 89 ampere-hours and a $ZnO:Ni(OH)_2$ ampere-hour ratio of 1.76. As can be seen from Figure 2, at 250 cycles the cell still retains about 80% of its original capacity (i.e., energy) and about 96% of its original power. The power was determined by periodically drawing 300 amps from the cell for about 30 secs at the beginning of a discharge cycle. At the end of about 300 cycles, the cell was subjected to several discharge rates (i.e., between recharges) and the cell voltage drop and output capacity determined for the several rates. Figure 3 shows how very little the cell's capacity varys with discharge rate. In this regard, at the 25 ampere rate that cell demonstrated a capacity, of 62.3 AH and at the 100 ampere rate it demonstrated a capacity of 55AH. Similarly, Figure 4 shows how little the cell voltage falls off at very high discharge rates. Hence, even after over 300 cylces, the capacity of the preferred cells still demonstrated a surprising ability to deliver its energy even at very high rates.

Still other tests have been made with a cell containing 33 plates and a separator system like that described in conjunction with the 29-plate cell of Figure 2. This cell had a theoretical capacity of about 119AH derated to 101AH at 85% of its theoretical capacity. The zinc electrodes have copper grids and an active material mix comprising 15.31 gms zinc oxide, 11.48 gms $Ca(OH)_2$, 1.04 gms $Pb_3O_4$ and 0.37 gms of newsprint. This cell has a $ZnO:Ni(OH)_2$ ampere-hour ratio of only 1.34 and after some 276 cycles has performed substantially the same as the above 29-plate test cell as shown in Figure 2. Still further reduction in the zinc oxide/ $Ni(OH)_2$ are expected as the basic formula is optimized. As this ratio is reduced, the energy density of cells made therefrom increases.

## Claims

1. An alkaline nickel-zinc electric storage battery cell having a nickel electrode, a zinc electrode spaced from the nickel electrode, and an aqueous alkaline electrolyte bridging the space between the electrodes, wherein said zinc electrode includes a conductive grid embedded in an active material of zinc-rich particles in substantially homogeneous admixture with other ingredients, characterised in that said other ingredients include a combination of calcium oxide and/or hydroxide particles for forming calcium zincate during discharge of said cell and an entanglement of sufficient natural cellulose fibres to bind said particles together on said grid and so irrigate said admixture with electrolyte as to maintain the effectiveness of the CaO/Ca $(OH)_2$ therein, said active material containing substantially no other binders which would significantly interfere with the ability of the cellulose to thusly irrigate the admixture or diminish the performance of the zinc electrode.

2. An alkaline nickel-zinc cell according to claim 1, wherein said electrolyte comprises potassium hydroxide, said grid comprises copper, said zinc-rich particles comprise zinc oxide, and said calcium-zincate-former comprises calcium hydroxide, characterised in that said admixture also includes $Pb_3O_4$, the calcium hydroxide content is between 0.25 and 1.5 moles of calcium hydroxide per mole of zinc oxide, the $Pb_3O_4$ content is up to 4% by weight of the admixture, and the cellulose fibre content is between 0.5% and 10% by weight of the admixture.

3. An alkaline nickel-zinc cell according to any one of the preceding claims, characterised in that some of said fibres are longer than the openings in said grid and some are shorter than said openings.

## Patentansprüche

1. Alkalische Nickel-Zink-Speicherbatterie mit einer Nickelelektrode, einer von der Nickelelektrode beabstandeten Zinkelektrode und einem wässrigen alkalischen Elektrolyten, der den Raum zwischen den Elektroden überbrückt, wobei die Zinkelektrode ein in einem aktiven Material von zinkreichen Partikeln in im wesentlichen homogenem Gemenge mit anderen Bestandteilen eingebettetes leitendes Gitter enthält, dadurch gekennzeichnet, daß die anderen Bestandteile eine Kombination aus Calcium-Oxid-und/oder-Hydroxid-Teilchen enthalten zum Bilden von Calcium-Zinkat während des Entladens der Zelle und ein Gewirr von genügend Naturcellulosefasern, um die Teilchen an dem Gitter zusammenzuhalten und so das Gemenge mit Elektrolyt zu befeuchten, um die Wirksamkeit des darin enthaltenen CaO/Ca(OH)$_2$ aufrecht zu erhalten, wobei das aktive Material im wesentlichen keine anderen Binder enthält, die die Fähigkeit der Cellulose, das Gemenge so zu befeuchten, beträchtlich stören oder die Funktion der Zinkelektrode beeinträchtigen könnten.

2. Alkalische Nickel-Zink-Zelle nach Anspruch 1, bei der der Elektrolyt Kaliumhydroxid enthält, das Gitter Kupfer enthält, die zinkreichen Teilchen Zinkoxid enthalten und der Calciumzinkat-Bildner Calciumhydroxid enthält, dadurch gekennzeichnet, daß das Gemenge auch Pb$_3$O$_4$ enthält, daß der Calciumhydroxidanteil zwischen 0,25 und 1,5 mol Calciumhydroxid pro mol Zinkoxid liegt, der Pb$_3$O$_4$-Anteil bis zum 4 Gew.% des Gemenges beträgt und der Anteil von Cellulosefasern zwischen 0,5 und 10 Gew.% des Gemenges liegt.

3. Alkalische Nickel-Zink-Zelle nach einem der Vorangehenden Ansprüche, dadurch gekennzeichnet, daß einige Fasern länger als die Öffnungen in dem Gitter und einige kürzer als diese Öffnungen sind.

## Revendications

1. Cellule alcaline nickel-zinc d'accumulateur électrique comportant une électrode en nickel, une électrode en zinc espacée de cette électrode en nickel et un électrolyte alcalin aqueux remplissant l'espace séparant ces électrodes, dans laquelle l'électrode en zinc comprend un grille conductrice noyée dans une matière active de particules riches en zinc formant un mélange homogène avec d'autres ingrédients, caractérisée en ce que ces autres ingrédients comprennent une combinaison de particules d'oxyde et/ou d'hydroxyde de calcium, permettant de former du zincate de calcium pendant la décharge de la pile, et un ensemble entremêlé de suffisamment de fibres de cellulose naturelle pour lier entre elles ces particules sur la grille et pour irriguer ainsi ledit mélange en électrolyte, de façon à y maintenir le pouvoir d'action du CaO/Ca(OH)$_2$, la matière active ne contenant pratiquement pas d'autres liants qui, de manière notable, interféreraient avec l'aptitude de la cellulose à ainsi irriguer le mélange ou diminueraient le rendement de l'électrode de zinc.

2. Cellule alcaline nickel-zinc suivant la revendication 1, dans laquelle l'électrolyte est constituée d'hydroxyde de potassium, la grille est constituée de cuivre, les particules riches en zinc sont constituées par le l'oxyde de zinc et le produit de formation de zincate de calcium est constitué d'hydroxyde de calcium, caractérisée en ce que le mélange comprend aussi du Pb$_3$O$_4$, la concentration de l'hydroxyde de calcium est comprise entre 0,25 et 1,4 moles d'hydroxyde de calcium par mole d'oxyde de zinc, la concentration du Pb$_3$O$_4$, représente jusqu'à 4% en poids du mélange et la concentration en fibres de cellulose est comprise entre 0,5% et 10% en poids du mélange.

3. Cellule alcaline nickel-zinc suivant l'une quelconque des revendications précédentes, caractérisée en ce que certaines des fibres sont plus longues que les ouvertures de la grille et certaines sont plus courtes que ces ouvertures.

Fig. 1

Fig. 2

Fig. 3

Fig. 4